# EUROPÄISCHE PATENTANMELDUNG

(11) **EP 1 222 959 A2**
(43) Veröffentlichungstag der Anmeldung: **17.07.2002**
(21) Anmeldenummer: 01130647.9
(22) Anmeldetag: 20.12.2001
(51) Int. Cl.: B01J 20/34

(54) **Verfahren und Vorrichtung zum Regenerieren eines Adsorbers**

(30) Priorität: 03.01.2001 DE 10100114
(71) Anmelder: Linde Aktiengesellschaft, 65189 Wiesbaden (DE)
(72) Erfinder: Hauck, Gunther, Dipl.-Ing., 10179 Berlin (DE)
(74) Vertreter: Zahn, Christoph

(57) **Zusammenfassung**

Die Erfindung betrifft ein Verfahren sowie eine Vorrichtung zum Regenerieren eines beladenen Adsorbers mittels eines erwärmten Regeneriergasstromes.

Erfindungsgemäß wird der Regeneriergasstrom (4, 6, 11) mittels eines heißen Thermoölstromes (W, 10) erwärmt.

Zusätzlich und/oder zumindest zeitweise alternativ kann der Regeneriergasstrom (4, 6, 11) auch mittels eines elektrischen Erhitzers (E) erwärmt werden. Der Thermoölstrom (10) wird in einem Thermoölsystem, das von Erdgas, Erdöl, Gichtgas, Kokereigas, etc. und/oder feste Brennstoffe befeuert wird, oder in einem Thermoölsystem, das zumindest teilweise durch Nutzung von Abwärme beheizt wird, erzeugt.

## Beschreibung

Die Erfindung betrifft ein Verfahren sowie eine Vorrichtung zum Regenerieren eines beladenen Adsorbers mittels eines erwärmten Regeneriergasstromes.

Bei der Reinigung bzw. Auftrennung eines wenigstens zweikomponentigen Gasgemisches mittels eines Adsorptionsprozesses können prinzipiell zwei unterschiedliche Verfahrensweisen realisiert werden; nämlich die sog. Temperature-Swing-Adsorption-Prozesse oder die sog. Pressure-Swing-Adsorption-Prozesse. Bei Letzteren wird die Adsorption bei einem Druck p durchgeführt, während die Desorption und Regenerierung eines beladenen Adsorbers bei einem Druck < p erfolgt.

Demgegenüber erfolgt im Falle eines Temperature-Swing-Adsorption-Prozesses die Adsorption bei einer Temperatur T, während die Regenerierung eines beladenen Adsorbers bei einer Temperatur > T durchgeführt wird. Bei der thermischen Regenerierung werden die im Adsorptionstakt vom Adsorbens bzw. Adsorptionsmittel festgehaltenen Verunreinigungen wieder desorbiert, indem ein Regeneriergas unter einer Temperatur T₂ über das Adsorbens geleitet wird, die - wie bereits erwähnt - höher ist als die Temperatur T₁ im Adsorptionstakt. Die Temperaturdifferenz T₂ - T₁ beträgt mindestens 30 K und liegt beispielsweise im Bereich von 30 bis 250 K, vorzugsweise 80 und 180 K. Übliche Adsorptionstemperaturen liegen bei 5 bis 35 °C, vorzugsweise bei 7 bis 20 °C.

Solche Verfahren werden beispielsweise auch zur Reinigung von Einsatzluft für eine Tieftemperatur-Luftzerlegung angewandt, wobei atmosphärische Luft verdichtet und der Reinigung zugeführt wird. Die gereinigte Luft wird dann abgekühlt und mindestens teilweise einer Rektifiziersäule zugeführt. Hierbei wird im Regelfall mindestens ein Paar von umschaltbaren Adsorbern, die wechselweise beladen (Adsorptionstakt) und desorbiert (Regeneriertakt) werden, vorgesehen; wie beispielsweise aus der DE-A 20 64 137 bekannt.

Das wechselweise bei 80 bis 250°C thermisch regenerierte Adsorberpaar zur Vorreinigung der Luft vor dem kalten Teil einer rektifikatorischen Luftzerlegung stellt eine seit langem wohlbekannte und angewandte Technik dar. Dabei werden hauptsächlich Wasser und Kohlendioxid aus dem verdichteten Einsatzluftstrom abgetrennt, sowie weitere Kohlenwasserstoffe und Azetylen (C₂H₂), das in flüssigem Sauerstoff (LOX) ein hohes Gefahrenpotenzial darstellt.

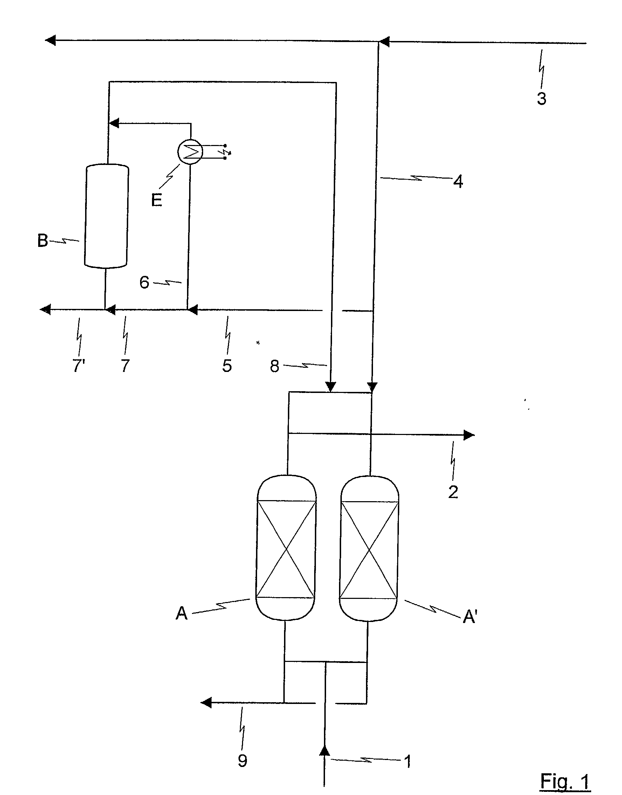

Die für die Vorreinigung verwendeten Adsorber werden, sobald sie beladen sind, mittels eines aus der Luftzerlegungsanlage abgezogenen Restgasstromes regeneriert. Dieser Restgasstrom liegt am Austritt des Hauptwärmetauschers mit ca. 20 °C vor. Er wird deshalb während des Regeneriertaktes zunächst auf eine Temperatur zwischen 180 und 220 °C erhitzt und über den beladenen Adsorber geleitet. Das Erhitzen des vorgenannten Regeneriergasstromes erfolgt bisher im Regelfall mittels eines elektrischen Erhitzers. Diese Verfahrensweise sei anhand des in der Figur 1 dargestellten Ausführungsbeispieles näher erläutert.

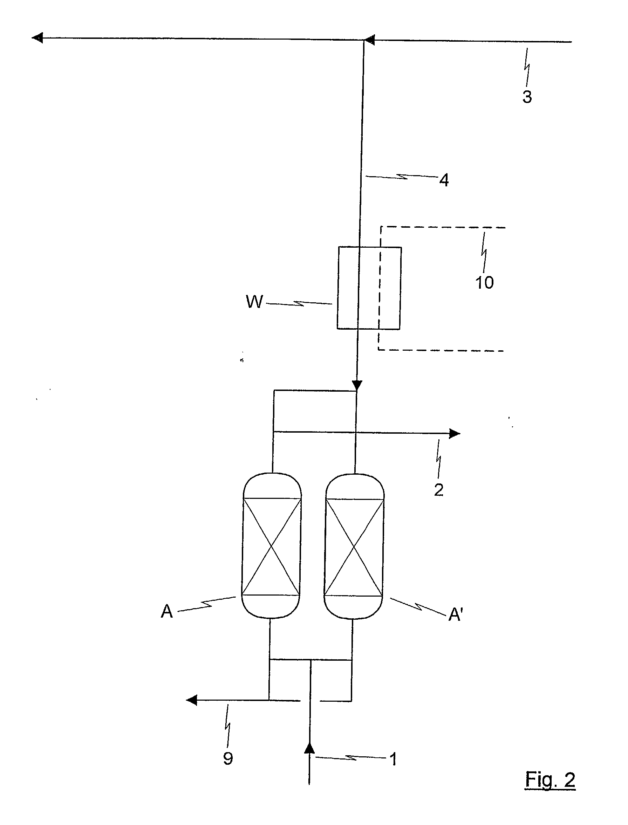

Sowohl bei dem in der Figur 1 dargestellten Ausführungsbeispiel als auch bei den in den Figuren 2 bis 5 dargestellten Ausführungsbeispielen wird auf die Darstellung der erforderlichen (Regel)Ventile, Klappen, etc., deren Anordnung dem Fachmann geläufig ist, verzichtet.

Die Figur 1 zeigt ein Adsorberpaar A und A', dem über Leitung 1 der verdichtete und zu reinigende Einsatzluftstrom zugeführt wird. Während sich einer der Adsorber im Adsorptionstakt befindet, wird der andere Adsorber bzw. das darin angeordnete Adsorptionsmittel desorbiert bzw. regeneriert. Die von den vorgenannten störenden Komponenten befreite Einsatzluft wird über Leitung 2 aus den Adsorbern A und A' abgezogen und einer in der Figur 1 sowie in den Figuren 2 bis 5 nicht dargestellten kryogenen Luftzerlegungsanlage zugeführt.

Über Leitung 3 wird ein in der kryogenen Luftzerlegungsanlage anfallender Restgasstrom aus der Luftzerlegungsanlage abgezogen. Zumindest ein Teilstrom dieses Restgasstromes wird über Leitung 4 abgezweigt, über die Leitungen 5 und 6 einem elektrischen Erhitzer E zugeführt und in diesem auf die gewünschte Regeneriergastemperatur - beispielsweise 180 bis 220 °C - erhitzt. Der so erhitzte Regeneriergasstrom wird anschließend über Leitung 8 dem im Regeneriertakt befindlichen Adsorber zugeführt. Nach dem Durchströmen des beladenen und zu regenerierenden Adsorbers verlässt der mit den desorbierten Komponenten beladene Regeneriergasstrom die Adsorber über Leitung 9.

Im Regelfall schließt sich während des Regeneriertaktes dem Aufheizen des beladenen Adsorbens mittels des heißen Regeneriergasstromes ein Kühlschritt an. Der zu regenerierende Adsorber wird dabei von dem Restgasstrom mit einer Temperatur von ca. 20 °C durchströmt. In Folge dessen wird das in der Adsorptionsmittelschüttung aufgebaute Temperaturprofil durch die Adsorptionsmittelschüttung geschoben. Der Kühlschritt ist dann beendet, wenn in der gesamten Adsorptionsmittelschüttung eine Temperatur herrscht, die nahe an der Temperatur des Restgasstromes liegt.

Ein derartiger Kühlschritt verhindert, dass nach dem Umschalten der Adsorber heiße Einsatzluft über Leitung 2 der kryogenen Luftzerlegungsanlage zugeführt wird, was erhebliche Nachteile mit sich brächte. Während des Kühlschrittes ist ein Erhitzen des Restgasstromes nicht erforderlich. Um die Anschlussleistung des elektrischen Erhitzers E zu verringern, kann während dieser Zeit ein Wärmespeicher B aufgeladen werden. Dazu wird zusätzlich Restgas erhitzt, durch den Wärmespeicher B geführt und über Leitung 7' abgezogen. Sobald nun erneut erhitztes Restgas benötigt wird, wird ein Teilstrom des Restgasstromes durch den elektrischen Erhitzer E und ein Teilstrom durch den Wärmespeicher B geführt.

Sobald die Regenerierung eines beladenen Adsorbers beendet ist, werden die Adsorber "umgeschaltet". Dies bedeutet, dass nunmehr derjenige Adsorber, der sich zuvor im Adsorptionstakt befand, regeneriert wird, während der zuvor regenerierte Adsorber in den Adsorptionstakt geschaltet wird.

Alternativ zu der in der Figur 1 dargestellten Erhitzung des Regeneriergasstromes mittels des elektrischen Erhitzers E kann auch - sofern vorhanden und im entsprechenden Druckbereich vorliegend - Dampf verwendet werden. Der Betrieb eines Dampfsystemes ist jedoch vergleichsweise aufwendig.

Aufgabe der vorliegenden Erfindung ist es, ein Verfahren sowie eine Vorrichtung zum Regenerieren eines beladenen Adsorbers,mittels eines erwärmten Regeneriergasstromes anzugeben, das bzw. die gegenüber dem beschriebenen Stand der Technik wirtschaftlicher ist bzw. einfacher betrieben werden kann.

Zur Lösung dieser Aufgabe wird ein Verfahren vorgeschlagen, das dadurch gekennzeichnet, dass der Regeneriergasstrom mittels eines heißen Thermoölstromes erwärmt wird.

Erfindungsgemäß ist nunmehr ein sog. Thermoölsystem vorzusehen, in welchem durch die Verbrennung fossiler Energieträger und/oder geeigneter Reststoffe und/oder durch die Nutzung geeigneter Abwärme ein heißer Thermoölstrom erzeugt wird, der - als Wärmeträger fungierend - den Regeneriergasstrom erhitzt.

Die erfindungsgemäße Vorrichtung zum Regenerieren eines beladenen Adsorbers mittels eines erwärmten Regeneriergasstromes besteht aus
- einem oder mehreren parallel und/oder seriell angeordneten Adsorbern,
- wenigstens einer mit dem oder den Adsorbern verbundenen Regeneriergasleitung,
- einem Thermoölsystem, in dem durch Verbrennung eines geeigneten Mediums ein heißer, gegebenenfalls zirkulierender Thermoölstrom erzeugt wird, und
- wenigstens einem Wärmetauscher, in dem ein Wärmekontakt zwischen dem zu erwärmenden Regeneriergasstrom und dem Thermoölstrom erfolgt.

Die Erfindung ermöglicht es, die Erhitzung des Regeneriergasstromes erheblich billiger, als dies bei der Verwendung eines elektrischen Erhitzers möglich ist, zu realisieren. Ein weiterer Vorteil der Erfindung besteht darin, dass der zum Einsatz kommende Regeneriergasstrom/Thermoöl-Wärmetauscher lediglich einen Druckverlust von ca. 2,5 mbar aufweist. Demgegenüber erzeugt ein Wärmespeicher einen Druckverlust von ca. 50 mbar - incl. der durch Klappen, Rohrleitungen, etc. verursachten Druckverluste.

Daraus ergibt sich der weitere Vorteil, dass der Regeneriergasstrom unter einem niedrigeren Druck vorliegen kann, was im Falle einer kryogenen Luftzerlegung zur Folge hat, dass der Einsatzluftstrom weniger stark verdichtet werden muss. Daraus resultiert eine nicht unerhebliche Einsparung bzgl. der Verdichtungskosten.

Das erfindungsgemäße Verfahren, die erfindungsgemäße Vorrichtung sowie weitere Ausgestaltung des- bzw. derselben seien anhand der in den Figuren 2 bis 5 dargestellten Ausführungsbeispiele näher erläutert.

Bei der in der **Figur 2** dargestellten Ausführungsform der Erfindung ist in der Leitung 4, in der zumindest ein Teilstrom des Restgases abgezogen und den Adsorbern zum Zwecke der Regenerierung zugeführt wird, ein Wärmetauscher W angeordnet. Über die gestrichelt gezeichnete Leitung 10 wird ein erhitzter Thermoölstrom, der in einem in den Figuren 2 bis 5 nicht dargestellten Thermoölsystemen erzeugt wird, durch den Wärmetauscher W geführt und erwärmt so den in der Leitung 4 geführten Regeneriergasstrom.

Wird keine Erwärmung des Regeneriergasstromes in der Leitung 4 gewünscht, so muss der Thermoölstrom in der Leitung 10 entweder unterbrochen oder eine - in den Figuren 2 bis 5 nicht dargestellte - den Wärmetauscher W umgehende By-pass-Leitung vorgesehen werden.

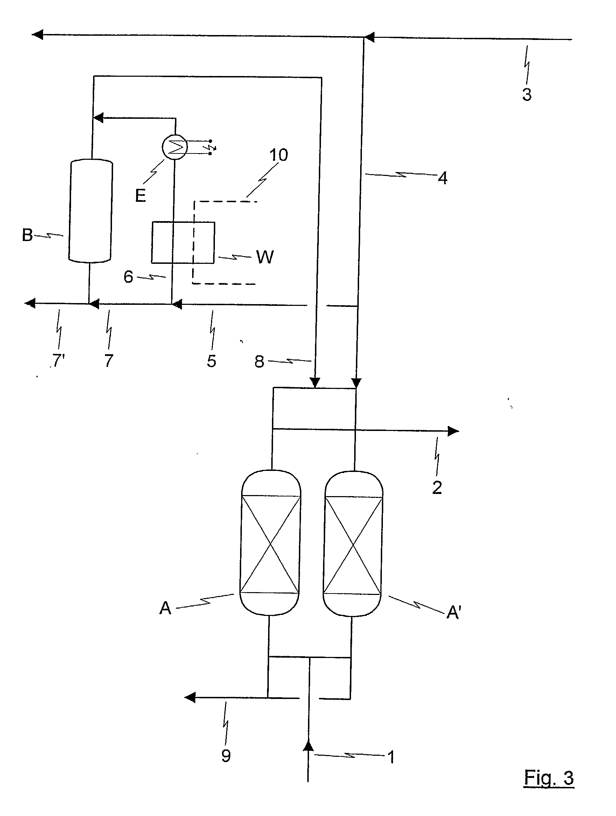

Die **Figur 3** zeigt ein Ausführungsbeispiel, das sich von dem in der Figur 1 dargestellten Ausführungsbeispiel nur dadurch unterscheidet, dass dem elektrischen Erhitzer E der Wärmetauscher W vorgeschaltet ist; er könnte ihm jedoch auch nachgeschaltet sein. Der zu erwärmende Regeneriergasstrom in der Leitung 6 kann nunmehr entweder durch den in der Leitung 10 zirkulierenden heißen Thermoölstrom, durch den elektrischen Erhitzer E oder durch die Kombination aus Thermoölstrom und elektrischem Erhitzer auf die gewünschte Regeneriergastemperatur erwärmt werden.

Die in der Figur 3 dargestellte Verfahrensweise bietet sich insbesondere bei der Nachrüstung bestehender Anlagen, bei denen die Erwärmung des Regeneriergasstromes mittels eines elektrischen Erhitzers erfolgt, an, da die Betriebsweise, insbesondere die Programmierung der Anlagensteuerung, nicht geändert werden muss.

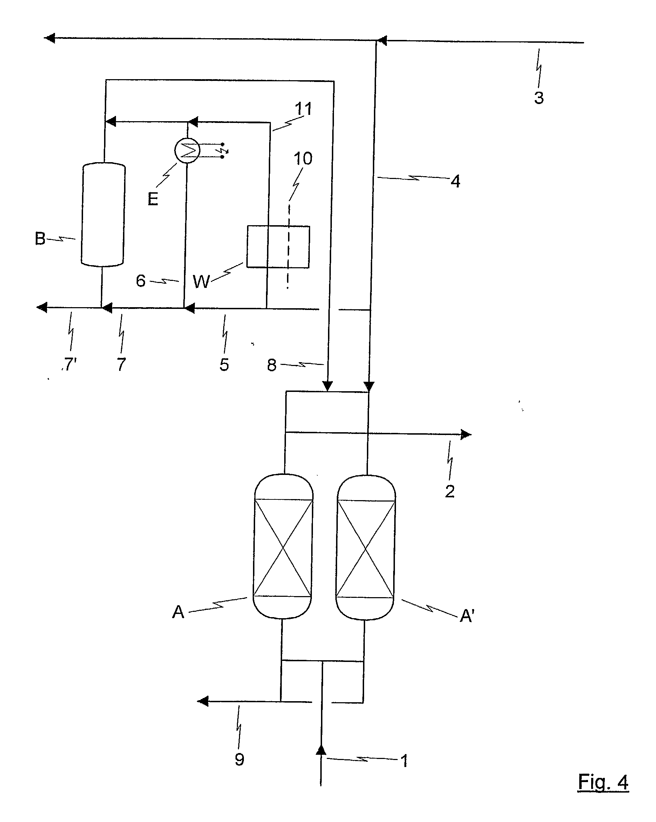

Die **Figur 4** zeigt eine weitere mögliche Verfahrensweise, bei der der Wärmetauscher W in einer parallel zu der bereits erläuterten Leitung 6 vorgesehenen Leitung 11 angeordnet ist. Diese Verfahrensweise macht insbesondere dann Sinn, wenn der elektrische Erhitzer E und der Wärmespeicher B als sog. Back-up weiterhin zur Verfügung stehen sollen, im Normalbetrieb die gesamte zu erhitzende Regeneriergasmenge jedoch durch den Wärmetauscher W geleitet wird. Dadurch wird der erforderliche Restgasdruck gesenkt. Während des normalen Betriebes wird ein kleiner Teilstrom des erhitzten Restgasstromes durch den Wärmespeicher B geführt, so dass sichergestellt ist, dass der Wärmespeicher B auf einer ausreichenden Betriebs- bzw. Einsatztemperatur gehalten werden kann.

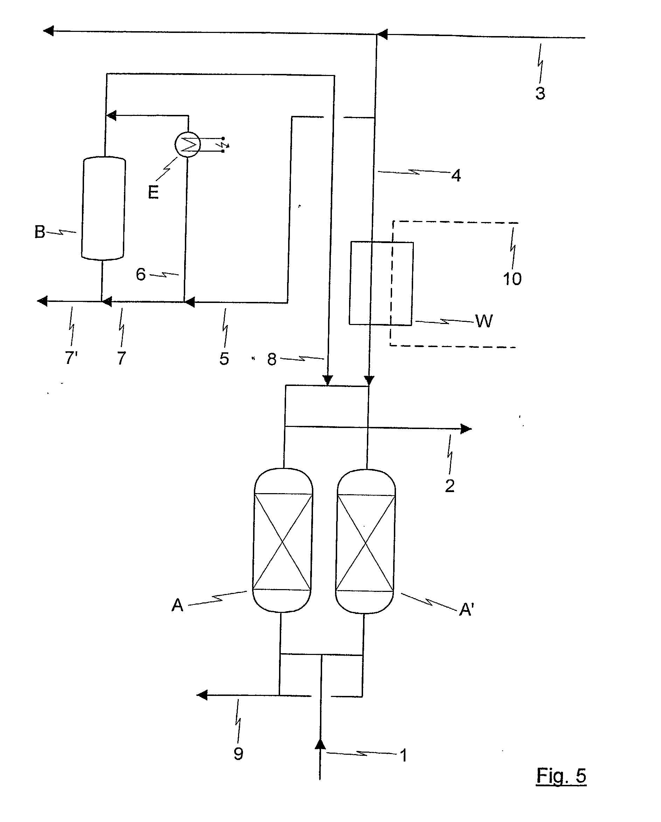

Die in der **Figur 5** dargestellte, vereinfachte Verfahrensweise der Figur 4 hat den Vorteil, dass die erforderliche Verrohrung weniger aufwendig ist. Dem steht der Nachteil eines geringfügig erhöhten Druckabfalles während des Kühlschrittes gegenüber.

Das erfindungsgemäße Verfahren sowie die erfindungsgemäße Vorrichtung zum Regenerieren eines beladenen Adsorbers mittels eines erwärmten Regeneriergasstromes ermöglichen eine deutliche Verringerung der für die Erwärmung des Regeneriergasstromes erforderlichen Leistung. Gegenüber den Systemen, bei denen Dampf zum Erwärmen des Regeneriergasstromes verwendet wird, sind sie zudem einfacher zu betreiben.

## Patentansprüche

1. Verfahren zum Regenerieren eines beladenen Adsorbers mittels eines erwärmten Regeneriergasstromes, **dadurch gekennzeichnet, dass** der Regeneriergasstrom (4, 6, 11) mittels eines heißen Thermoölstromes (W, 10) erwärmt wird.

2. Verfahren nach Anspruch 1, **dadurch gekennzeichnet, dass** der Regeneriergasstrom (6, 11) zusätzlich und/oder zumindest zeitweise alternativ mittels eines elektrischen Erhitzers (E) erwärmt wird.

3. Verfahren nach Anspruch 1 oder 2, **dadurch gekennzeichnet, dass** der Thermoölstrom (10) in einem Thermoölsystem, das von Erdgas, Erdöl, Gichtgas, Kokereigas, etc. und/oder feste Brennstoffe befeuert wird, erzeugt wird.

4. Verfahren nach einem der vorhergehenden Ansprüche, **dadurch gekennzeichnet, dass** der Thermoölstrom (10) in einem Thermoölsystem, das zumindest teilweise durch Nutzung von Abwärme beheizt wird, erzeugt wird.

5. Verfahren nach einem der vorhergehenden Ansprüche, wobei der oder die zu regenerierenden Adsorber der Abtrennung von Verunreinigungen wie Wasser, Kohlendioxid, etc. aus einem einer kryogenen Luftzerlegungsanlage zugeführten Luftstrom dient, **dadurch gekennzeichnet, dass** als Regeneriergasstrom (4, 6, 11) zumindest ein Teilstrom des oder eines in der kryogenen Luftzerlegungsanlage anfallenden Restgasstromes verwendet wird.

6. Vorrichtung zum Regenerieren eines beladenen Adsorbers mittels eines erwärmten Regeneriergasstromes, bestehend aus
- einem oder mehreren parallel und/oder seriell angeordneten Adsorbern (A, A'),
- wenigstens einer mit dem oder den Adsorbern (A, A') verbundenen Regeneriergasleitung (4, 6, 8, 11),
- einem Thermoölsystem, in dem durch Verbrennung eines geeigneten Mediums ein heißer, gegebenenfalls zirkulierender Thermoölstrom (10) erzeugt wird, und
- wenigstens einem Wärmetauscher (W), in dem ein Wärmekontakt zwischen dem zu erwärmenden Regeneriergasstrom (4, 6, 8, 11) und dem Thermoölstrom (10) erfolgt.

7. Vorrichtung nach Anspruch 6, **dadurch gekennzeichnet, dass** dem Wärmetauscher (W) in der oder einer der Regeneriergasleitungen (4, 6, 8, 11) ein elektrischer Erhitzer (E) vor-, nach- und/oder parallel geschaltet ist.
